# EUROPÄISCHE PATENTSCHRIFT

(11) **EP 0 927 399 B1**
(45) Veröffentlichungstag und Bekanntmachung des Hinweises auf die Patenterteilung: **08.03.2000**
(21) Anmeldenummer: 97909148.5
(22) Anmeldetag: 18.09.1997
(51) Int. Cl.: G06F 17/50

(54) **VERFAHREN ZUR OPTIMIERTEN RECHNERGESTÜTZTEN AUFTEILUNG VON KNOTEN EINES GRAPHEN IN CLUSTER, WOBEI DER GRAPH EIN TECHNISCHES SYSTEM DARSTELLT**
COMPUTER-AIDED OPTIMIZATION OF THE CLUSTER-DISTRIBUTION OF NODES FROM A NODE GRAPH REPRESENTING A TECHNICAL SYSTEM
TECHNIQUE D'OPTIMISATION PAR ORDINATEUR DE LA REPARTITION EN GRAPPES DES NOEUDS D'UN GRAPHE REPRESENTANT UN SYSTEME TECHNIQUE

(30) Priorität: 18.09.1996 DE 19638131
(43) Veröffentlichungstag der Anmeldung: 07.07.1999
(73) Patentinhaber: SIEMENS AKTIENGESELLSCHAFT, 80333 München (DE)
(72) Erfinder: LAUTHER, Ulrich, D-80686 München (DE); HOFMEISTER, Michael, D-84405 Dorfen (DE)
(86) Internationale Anmeldenummer: DE9702109
(87) Internationale Veröffentlichungsnummer: WO9812653

(56) Entgegenhaltungen:
- RAJMOHAN RAJARAMAN ET AL: "OPTIMAL CLUSTERING FOR DELAY MINIMIZATION" PROCEEDINGS OF THE DESIGN AUTOMATION CONFERENCE, DALLAS, JUNE 14 - 18, 1993, Nr. CONF. 30, 14.Juni 1993, INSTITUTE OF ELECTRICAL AND ELECTRONICS ENGINEERS, Seiten 309-314, XP000371326
- RAJEEV MURGAI ET AL: "ON CLUSTERING FOR MINIMUM DELAY/AREA" INTERNATIONAL CONFERENCE ON COMPUTER AIDED DESIGN. (ICCAD), SANTA CLARA, NOV. 11 - 14, 1991, Nr. CONF. 9, 11.November 1991, INSTITUTE OF ELECTRICAL AND ELECTRONICS ENGINEERS, Seiten 6-9, XP000315128

## Beschreibung

Verfahren zur optimierten rechnergestützten Aufteilung von Knoten eines Graphen in Cluster, wobei der Graph ein technisches System repräsentiert.

In verschiedenstenen technischen Anwendungen wird eine Optimierung verschiedenster Aspekte der Anwendung durchgeführt, indem zur Optimierung die Anwendung in Form eines Graphen, der eine beliebige Anzahl von Knoten und Kanten aufweist, beschrieben wird. Ein solches technisches Gebiet ist beispielsweise in dem Entwurf, der Planung, der Verlegung von Kommunikationsnetzen jeglicher Art zu sehen. Bei der Planung und der Verlegung von Kommunikationsnetzen werden Vermittlungseinheiten üblicherweise als Knoten modelliert, und die Kopplungen zwischen den Vermittlungseinheiten werden als Kanten eines Graphen beschrieben. Eine weitere Anwendung, die mit einem Graphen beschrieben werden kann, ist in dem Layout elektrischer Schaltungen zu sehen. In diesem Anwendungsszenario werden die elektrischen Schaltungselemente als Knoten und die Kopplungen zwischen den Schaltungselementen als Kanten des Graphen beschrieben.

Ein Optimierungskriterium, welches häufig gelöst werden muß, ist die Aufteilung der Knoten eines Graphen in eine möglichst geringe Anzahl von Gruppen, die im weiteren als Cluster bezeichnet werden.

Die Aufteilung der Knoten in Cluster soll möglichst in einer Weise erfolgen, daß eine vorgebbare Zielfunktion, mit der Kosten zur Realisierung bzw. zum Betrieb der durch den Graphen beschriebenen Anwendung beschrieben wird, minimiert wird. Dies bedeutet, es ist eine Menge von Clustern gesucht, bei der die durch die Aufteilung entstehenden Kosten der Cluster minimal ist.

Es ist bekannt, ein sog. Set Partitioning Problem mit Hilfe numerischer Optimierungsverfahren zu lösen, beispielsweise mit Hilfe von Branch and Bound-Techniken, die auf dem sog. Simplex-Verfahren basieren. Diese Verfahren sind in dem Dokument [1] dargestellt.

Ferner ist es bekannt, die Aufteilung der Knoten, also das Clustering der Knoten eines Graphen, in einer Weise durchzuführen, daß eine optimierte Aufteilung der Knoten in Cluster erreicht wird, wobei sich die Kostenfunktion auf Verbindungen zwischen den Clustern bezieht. Eine Übersicht über solche Verfahren ist in dem Dokument [2] zu finden.

Diese weisen jedoch u. a. einen erheblichen Nachteil auf, der darin zu sehen ist, daß die zu optimierende Zielfunktion sich auf die Verbindungen zwischen den einzelnen Clustern bezieht. Dies führt dazu, daß die bekannten Verfahren in verschiedensten technischen Anwendungen nicht einsetzbar sind, beispielsweise nicht bei der Planung von Kommunikationsnetzen. Die zu optimierende Zielfunktion ist in diesem Fall gegeben durch die innerhalb eines Clusters zu verwendende Elektroni, z. B. Multiplexer o. ä., sowie Verbindungskosten, die ebenfalls innerhalb des Clusters anfallen.

Ferner kann die Bildung der Cluster einer Vielzahl von Restriktionen unterworfen sein, beispielsweise Längenrestriktionen für Kopplungen, die über deren Zulässigkeit entscheiden.

Bei der Anwendung der Verfahren in dem Gebiet des Layouts von elektrischen Schaltungen sind die bekannten Verfahren ebenso dann nicht einsetzbar, wenn beispielsweise feste Timingrestriktionen durch eine vorgegebene Taktrate eingehalten werden müssen.

Somit liegt der Erfindung das Problem zugrunde, ein Verfahren zur optimierten rechnergestützten Aufteilung von Knoten eines Graphen in Cluster anzugeben, bei dem die Berücksichtigung von frei vorgebbaren Restriktionen möglich wird.

Das Problem wird durch das Verfahren gemäß Patentanspruch 1 gelöst.

Den Knoten des Graphen wird bei dem Verfahren jeweils ein Restriktionsteilwert zugeordnet. Mit dem Restriktionsteilwert wird jeweils für einen Restriktionsparameter, für den eine Restriktion vorgegeben ist, beschrieben, welchen Anteil an der Restriktion der Knoten jeweils bei Aufnahme des Knoten in ein Cluster beiträgt. Für die Cluster wird bei der Aufteilung überprüft, ob bei der Aufteilung Cluster entstehen, deren Clusterrestriktionswert größer ist als die Restriktion. Der Clusterrestriktionswert ergibt sich aus den einzelnen Restriktionsteilwerten der Knoten des jeweiligen Clusters.

Durch das Verfahren wird es erstmals möglich, mindestens eine frei vorgebbare Restriktion, allgemein eine beliebige Anzahl vorgebbarer Restriktionen bei einem Clustering in einem Graphen zu berücksichtigen, wodurch eine Anwendung in den oben genannten Gebieten der vollautomatisierten rechnergestützten Clusterverfahren möglich wird.

Vorteilhafte Weiterbildungen des Verfahrens ergeben sich aus den abhängigen Ansprüchen.

Durch Einsatz einer Heuristik in dem Clusteringverfahren wird eine erhebliche Einsparung an benötigter Rechenzeit bei der Durchführung des Verfahrens mit Hilfe eines Rechners erreicht. Eine vorteilhafte Heuristik, mit der sehr gute Resultate erzielt werden können, ist durch das Verfahren gemäß Patentanspruch 3 beschrieben.

Durch die Formulierung des Clusterings als ein Set Partitioning Problem und dessen exakte Lösung, wird eine nicht nur optimierte, sondern optimale Lösung für die Aufteilung der Knoten des Graphen ermittelt.

Das Verfahren kann vorteilhaft beispielsweise bei dem rechnergestützten Entwurf, der Planung oder der Verlegung von Kommunikationsnetzen oder auch im rechnergestützten Layout von elektrischen Schaltungen eingesetzt werden, allgemein in allen Gebieten, die mit einem Graphen beschrieben werden können, und bei denen es erforderlich ist, Knoten unter Einhaltung vorzugsweise clusterbezogener Restriktionen zu clustern.

Zwei Ausführungsbeispiele der Erfindung sind in den Figuren dargestellt und werden im weiteren näher erläutert.

Es zeigen
- Fig. 1: eine Skizze, in der sowohl die Rechneranordnung, mit der das Verfahren durchgeführt wird als auch das Verfahren in Form eines Ablaufdiagramms mit einigen Weiterbildungen des ersten Ausführungsbeispiels dargestellt ist;
- Fig. 2: eine Rechneranordnung zur Durchführung des Verfahrens sowie in Form eines Ablaufdiagramms das Verfahren in seinen Verfahrensschritten mit Weiterbildungen des zweiten Ausführungsbeispiels.

Allgemein wird bei dem Verfahren ein Graph G, der eine beliebige Anzahl von Knoten KN und Kanten KA, mit denen die Knoten KN miteinander gekoppelt werden, aufweist, mit einem Rechner R bearbeitet. Ohne Einschränkung der Allgemeingültigkeit des Verfahrens weist der Graph G in der weiteren Beschreibung eine baumförmige Topologie auf.

Mit dem rechnergestützten Verfahren werden die Knoten KN des Graphen in Cluster C aufgeteilt. Dabei wird eine Zielfunktion optimiert, die aus den Kosten der einzelnen Cluster C gebildet wird.

Den Knoten KN wird jeweils mindestens ein Restriktionsteilwert zugeordnet. Bei der Aufteilung der Knoten KN in Cluster C wird mindestens eine vorgebbare Restriktion berücksichtigt, indem für die gebildeten Cluster C überprüft wird, ob die Gruppierung der Knoten des jeweiligen Clusters C zu einem Clusterrestriktionswert führt, mit dem die jeweilige Restriktion verletzt wird. Der Clusterrestriktionswert ergibt sich jeweils aus den Restriktionsteilwerten der Knoten, die in dem jeweiligen Cluster C liegen.

Zur detaillierten Realisierbarkeit der Überprüfung von Restriktionseinhaltungen bei der Aufteilung von Knoten KN in Cluster C werden im weiteren zwei Ausführungsbeispiele erläutert.

### 1. Ausführungsbeispiel (Heuristik):

In einem ersten Ausführungsbeispiel wird eine Heuristik zur Aufteilung der Knoten KN dargestellt.

Die Heuristik umfaßt mindestens folgende Verfahrensschritte:

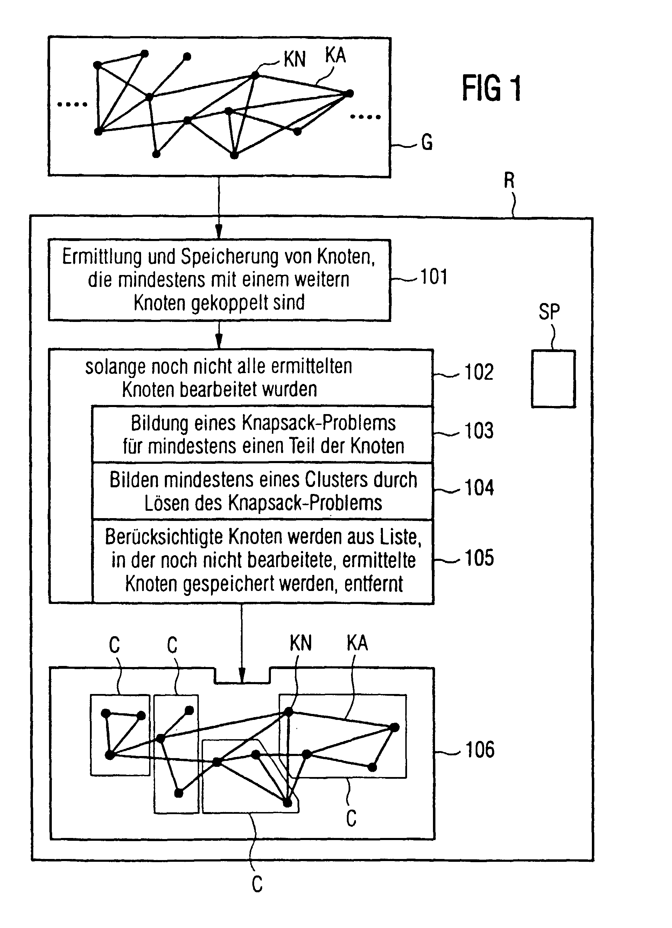

Es werden in einem ersten Schritt 101 Knoten KN ermittelt, die mindestens über eine Kante KA mit einem weiteren Knoten KN gekoppelt sind (vgl. Fig. 1). Diese Knoten KN werden in einem Speicher SP des Rechners R, mit dem das Verfahren durchgeführt wird, in einer Liste L eingetragen und gespeichert.

Anschließend wird in einer Iterationsschleife 102 eine Folge von Verfahrensschritten durchgeführt. Die Iterationsschleife wird solange nicht verlassen, solange noch ein Knoten KN in der Liste L gespeichert ist.

In einer Weiterbildung des Verfahrens ist es vorteilhaft, daß die Knoten KN in der Liste L in der Reihenfolge gespeichert werden, daß jeweils in der Liste L die Knoten KN bezüglich der Anzahl von mit dem jeweiligen Knoten KN gekoppelten Knoten KN monoton steigend eingetragen sind. Somit werden immer die Knoten aus der Liste L zuerst entnommen und bearbeitet, die in der Liste eine maximale Anzahl von Kanten KA und somit Kopplungen zu anderen Knoten KN aufweisen.

Für mindestens einen Teil der Knoten KN in der Liste L wird in einem ersten Schritt 103 innerhalb der Iterationsschleife ein Knapsack-Problem gebildet.

Das Knapsack-Problem kann beispielsweise folgendermaßen formuliert werden:
- Sog. Objekte des Knapsack-Problems sind mit dem jeweils untersuchten Knoten KN gekoppelte Knoten KN, die im weiteren als Nachbarknoten NKN bezeichnet werden. Dies beschreibt den Fall, daß Knoten KN in einem Cluster C zusammengruppiert werden können, da sie miteinander gekoppelt sind.
- Die Größe eines Objekts wird aus den Restriktionsteilwerten der jeweiligen Nachbarknoten NKN gebildet. Die Größe des Objekts kann beispielsweise einfach durch Summenbildung der Restriktionsteilwerte der Nachbarknoten NKN gebildet werden. Mögliche Interpretationen der Restriktionsteilwerte hängen von der jeweiligen Anwendung ab. Beispiele für mögliche Restriktionsteilwerte und für eine Restriktion werden im Zusammenhang mit den im weiteren beschriebenen Anwendungen des Verfahrens detailliert erläutert.
- Die Kapazität des Knapsacks ergibt sich z. B. aus der Differenz der Restriktion und des Restriktionsteilwerts des jeweils untersuchten Knotens KN.

Üblicherweise werden mindestens einem Teil der Knoten KN und/oder mindestens einem Teil der Kanten KA Kostenwerte zugeordnet werden, mit denen allgemein Kosten beschrieben werden, die durch die jeweilige Realisierung entstehen würden.

Das beispielsweise auf die oben beschriebene Weise gebildete Knapsack-Problem wird in einem weiteren Schritt 104 gelöst, wodurch mindestens ein Cluster C in der jeweiligen Iterationsschleife ermittelt wird. Das Knapsack-Problem kann beispielsweise mit einem Verfahren nach dem Prinzip der dynamischen Programmierung gelöst werden. Die jeweils in der Iterationsschleife bearbeiteten Knoten KN, die einem Cluster C zugeordnet wurden, werden markiert und aus der Liste L entfernt 105.

Das Ergebnis des Verfahrens ist eine Menge von Clustern C, die in dem Speicher SP des Rechners R gespeichert wird 106.

### 2. Ausführungsbeispiel (Set Partitioning Problem):

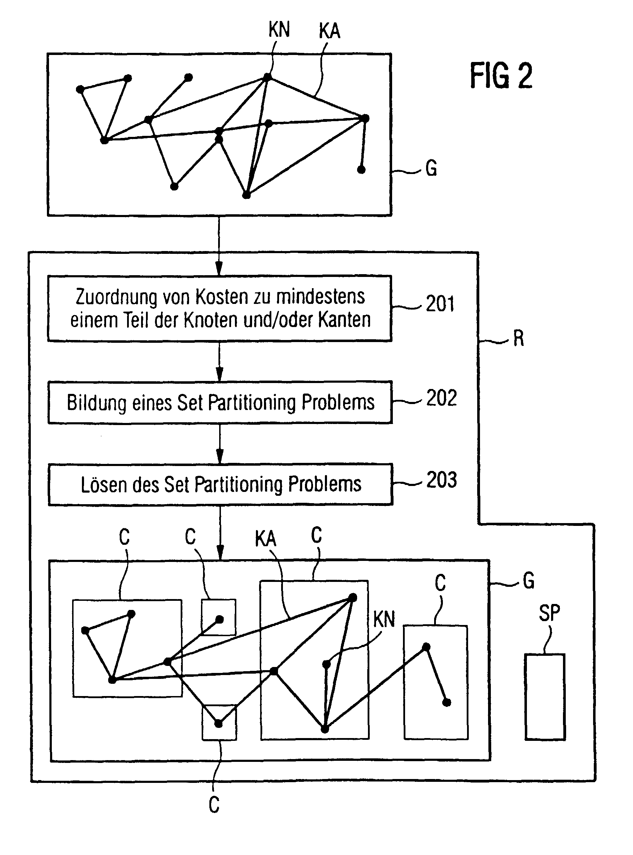

Eine weitere Möglichkeit zur Berücksichtigung von mindestens einer Restriktion bei der Aufteilung von Knoten KN eines Graphen G besteht darin, daß mindestens einem Teil der Knoten KN und/oder mindestens einem Teil der Kanten KA Kostenwerte zugeordnet werden, mit denen allgemein Kosten beschrieben werden, die durch die jeweilige Realisierung entstehen würden 201 (vgl. Fig. 2).

Für die rechnergestützte Aufteilung der Knoten KN wird in einem weiteren Schritt 202 ein Set Partitioning Problem gebildet und durch Lösung des Set Partitioning Problems 203 werden die Cluster C ermittelt.

Das Set Partitioning Problem kann beispielsweise derart gebildet werden, daß in einem ersten Schritt Zusammenhangskomponenten ZK des Graphen G ermittelt werden und in einer in dem Speicher SP des Rechners R gespeicherten Liste L eingetragen werden. Unter einer Zusammenhangskomponente ZK sind in diesem Zusammenhang eine Menge von Knoten KN zu verstehen, die über Kanten KA miteinander gekoppelt sind.

In einer Iterationsschleife werden folgende Schritte solange durchgeführt, bis keine Zusammenhangskomponente ZK mehr in der Liste L gespeichert ist. Es werden für mindestens eine Zusammenhangskomponente ZK mögliche Cluster C ermittelt, wobei ein ebenfalls ermittelter Clusterrestriktionsteilwert des jeweiligen Clusters C maximal gleich groß sein darf wie die Restriktion. In einer vorteilhaften Weiterbildung des Verfahrens wird unter Verwendung eines vollständigen Numerationsverfahrens eine Menge aller möglichen zulässigen Cluster C ermittelt.

In einer Weiterbildung des Verfahrens ist es vorteilhaft, daß bei der Bildung der möglichen Cluster C jeweils ein Knoten vorhanden ist, der mit jeden anderen Knoten KN des jeweiligen Clusters C gekoppelt ist.

Diese Weiterbildung ist v. a. bei der Verwendung des Verfahrens zur Planung und Verlegung von Kommunikationsnetzen sehr vorteilhaft.

Der Clusterrestriktionsteilwert ergibt sich wiederum aus den Restriktionsteilwerten der in dem Cluster enthaltenen Knoten KN, beispielsweise aus der Summe der einzelnen Restriktionteilwerte der in dem Cluster C enthaltenen Knoten KN.

Für die Cluster C werden Clusterkosten CK ermittelt, mit denen jeweils beschrieben wird, welche Kosten bei der Realisierung des jeweiligen Clusters durch die jeweilige Aufteilung verursacht werden.

Anhand der Clusterkosten wird das Set Partitioning Problem für die jeweilige Zusammenhangskomponente ZK gelöst, indem aus den ermittelten Clustern C für die Zusammenhangskomponente ZK eine Teilmenge von Clustern C ausgewählt wird, die kostenminimal ist. In einer Weiterbildung des Verfahrens ist es vorgesehen, daß jeder Knoten KN genau einem Cluster C zugeordnet wird.

In verschiedenen Anwedungsgebieten hat es sich als vorteilhaft herausgestellt, eine hierarchische Vorgehensweise bei dem Clustering des Graphen G zu wählen. Darunter ist zu verstehen, daß zu Beginn des Verfahrens mindestens ein Nahbereichscluster NB aus Knoten KN gebildet wird, der zusätzlich zu den Knoten KN des Graphen G weitere Knoten KNN des Nahbereichsclusters NB enthält, die nicht in dem Graphen G enthalten sind. Eine sehr vorteilhafte Verwendung dieser Weiterbildung wird im Zusammenhang mit dem rechnergestützten Entwurf, der Planung und der Verlegung von Kommunikationsnetzen detailliert dargestellt.

Für beide Ausführungsbeispiele, der Verwendung der Heuristik oder auch der Formulierung und Lösung des Set Partitioning Problems ist es in einer Weiterbildung vorteilhaft, bei der Kombination des mindestens einen Nahbereichsclusters NB mit den Clustern C die Anzahl der ermittelten Cluster noch einmal zu reduzieren.

Dies wird beispielsweise dadurch erreicht, daß mindestens einem Teil der Cluster C mindestens ein Knoten KN des jeweiligen Clusters C einem anderen Cluster C zugeordnet wird, wobei die neue Zuordnung nur dann erfolgt, wenn die Restriktion durch die neu gebildeten Clusterrestriktionsteilwerte nicht verletzt wird.

Anschaulich kann diese Vorgehensweise folgendermaßen dargestellt werden. Man geht beispielsweise von einem Cluster C aus, das lediglich einen Knoten KN enthält. Für das Cluster C wird ein benachbartes Cluster ermittelt, welches den Knoten KN aufnehmen kann, ohne daß die Restriktion durch die Aufnahme des Knotens KN in dem Cluster C verletzt wird. Kommt es zu einer Verletzung der Restriktion in dem benachbarten Cluster C durch Hinzufügung des Knoten KN, so wird wiederum ein Element des Clusters C gesucht, das bei Entfernung aus dem Cluster C die Verletzung der Restriktion beseitigt, und in ein Nachbarcluster gruppiert werden kann, usw.

Dieses Verfahren kann beispielsweise als ein Pfadproblem auf dem Graphen G formuliert werden und durch eine rekursive Tiefensuche realisiert werden. Die Pfadsuche bricht beispielsweise dann ab, sobald ein Cluster C gefunden wird, dessen Clusterrestriktionsteilwert durch Aufnahme des jeweiligen Knotens KN die Restriktion nicht verletzt.

Es ist in einer Weiterbildung vorgesehen, daß zu Beginn des Verfahrens Knoten KN, die nicht mit einem weiteren Knoten KN über eine Kante KA gekoppelt sind, als eigene Cluster C markiert werden und gespeichert werden und im weiteren Verfahren nicht berücksichtigt werden.

Ferner ist es in einer Weiterbildung des Verfahrens vorgesehen, die Nahbereichscluster NB mit den Clustern C zu verschmelzen, und durch die Clusterung und die Verschmelzung, d. h. durch die Kombination der Nahbereichscluster NB mit den Clustern C entstehende Gesamtkosten GK weiter zu reduzieren, indem ein sog. bekanntes lineares Zuordnungsproblem gelöst wird, wobei folgendes Verfahren von dem Rechner R durchgeführt wird:

Es wird eine frei vorgebbare obere Schranke ub und eine frei vorgebbare untere Schranke 1b gewählt. Der Wert der oberen Schranke kann beispielsweise zu Beginn des Verfahrens unendlich groß sein, und der Wert der unteren Schranke 1b kann zu Beginn des Verfahrens beispielsweise 0 sein.

Es wird eine Clustermenge CM gebildet, die alle Cluster C enthält, die mindestens zwei Knoten KN aufweisen.

In der Clustermenge CM ist das mindestens eine Nahbereichscluster NB nicht enthalten. Solange der Wert der oberen Schranke ub ungleich ist dem Wert der unteren Schranke 1b (ub ≠ lb) wird eine Iterationsschleife mit folgenden Verfahrensschritten durchgeführt:
- Aus jedem Cluster C der Clustermenge CM wird mindestens ein Knoten KN ausgewählt und in einer Clustermengenliste CML gespeichert. Dabei ist es vorteilhaft, falls in einem Cluster C ein Knoten KN als Wurzelknoten WKN des Clusters C ausgewählt wurde, daß der ausgewählte Knoten KN nicht der Wurzelknoten WKN des Clusters C ist.
- In einem weiteren Verfahrensschritt wird mindestens eine optionale Zuordnung von Knoten KN in der Clustermengenliste CML zu Clustern C der Clustermenge CM gebildet, wobei gewährleistet wird, daß durch die optionale Zuordnung die Restriktion nicht verletzt wird. Es ergeben sich Tripel, die z. B. folgende Werte enthalten (Knoten KN, Cluster C, Länge l des Pfades (Summe aller Kanten KA von dem Knoten KN zu dem Wurzelknoten WKN) von dem Knoten KN zu dem Wurzelknoten WKN des Clusters C). Die Länge l des Pfades wird jeweils dann angegeben, wenn der Kante KA jeweils ein Längenwert L, der auch als Kostenwert interpretiert werden kann, zugeordnet wird.

Durch Lösen des linearen Zuordnungsproblems, beispielsweise durch einen Flußalgorithmus, wie er in dem Dokument [3] beschrieben wird, wird eine Zuordnung der Knoten KN zu der Clustermengenliste CML zu den Clustern C der Clustermenge CM derart ermittelt, daß durch die neuen Cluster C eine Reduktion der Gesamtkosten GK erreicht wird, vorzugsweise eine Minimierung der Gesamtkosten GK realisiert wird.

Die Gesamtkosten GK ergeben sich beispielsweise aus der Summe aller Längen l der jeweils berücksichtigten Kanten KA. Für die jeweils neue Iterationsschleife wird dem Wert der unteren Schranke 1b der Summenwert zugewiesen.

Ferner ist eine Reduktion der Gesamtkosten GK in einer Weiterbildung des Verfahrens dadurch möglich, daß für die Knoten KN, die nicht in dem Nahbereichscluster NB enthalten sind ein weiteres Mal ein Set Partitioning Problem gebildet wird.

Wiederum wird eine kostenoptimale Clusterung der Knoten KN durch Lösen des Set Partitioning Problems, beispielsweise mit einem Branch and Bound Verfahren, wie es z. B. allgemein in dem Dokument [1] beschrieben ist, durchgeführt.

### Verwendung des Verfahren bei der Planung und Verlegung von Kommunikationsnetzen

Das Verfahren kann sehr vorteilhaft bei der rechnergestützten Planung, dem Entwurf und der Verlegung von Kommunikationsnetzen jeglicher Art eingesetzt werden.

Bei Kommunikationsnetzen existieren verschiedenste Formen von unbedingt einzuhaltenden Restriktionen, die durch das Verfahren erstmals berücksichtigt werden können.

Ein Graph G, der dem Rechner R zugeführt wird, ist beispielsweise in einer vorgegebenen Geländetopologie in digitaler Form, beispielsweise in Form eines Stadtplanes zu sehen.

Ferner sind bei der rechnergestützten Planung und der Verlegung von Kommunikationsnetzen Bedarfspunkte in dem Graphen G angegeben, mit entsprechenden Bedarfszahlen, wobei mit den Bedarfszahlen beispielsweise eine Anzahl benötigter Anschlüsse in einem bestimmten Gebiet des Stadtplans beschrieben wird. Unter einem Bedarfspunkt ist ein geographischer Ort zu verstehen, an dem ein Element des Kommunikationsnetzes innerhalb der vorgegebenen Geländetopologie plaziert werden kann.

Ferner wird beispielsweise mindestens ein Einspeisungspunkt in das zu errichtende Kommunikationsnetz vorgegeben. Ein solcher Einspeisungspunkt ist beispielsweise bei der Realisierung einer sog. Regional Line Destribution Unit (RLDU) eines Telefonienetzes vorgegeben. Ferner ist durch die Struktur des Graphen G, insbesondere durch die Kanten KA eine baumförmige Topologie von Gräben, in denen das Kommunikationsnetz oder auch ein anderes elektronisches Netz realisiert werden soll, vorgegeben.

Mögliche Restriktionen, die bei der Planung einzuhalten sind, sind beispielsweise in den folgenden Restriktionen zu sehen: Die einzelnen Knoten KN des Graphen G können beispielsweise sog. Endverzweiger (EVZ) sein, an die bis zu 60 Endteilnehmer angeschlossen werden können. Durch den vorgegebenen Knoten KN ist die Position des Endverzweigers oder auch von im weiteren beschriebenen Access-Multiplexern (AMX) vorgegeben. Die im vorigen beschriebenen Restriktionsteilwerte sind beispielsweise in diesem Fall die Bedarfswerte, die den jeweiligen Knoten KN zugeordnet werden. Diese werden beispielsweise durch einen Planer des Kommunikationsnetzes zuvor vorgegeben.

Durch das Verfahren wird das Kommunikationsnetz zwischen der Wurzel des Kommunikationsnetzes, die beispielsweise als RDLU bezeichnet wird und den Endverzweigern EVZ im Rahmen der Restriktionen kostenptimiert. Im sog. RDLU-Nahbereich, der eine Trassenlänge von 500 m aufweist, können Endverzweiger EVZ mit insgesamt bis zu 960 Teilnehmern direkt über mehradrige Kupferkabel an die RDLU angeschlossen werden. Dieser RDLU-Nahbereich entspricht dem im vorigen beschriebenen Nahbereichscluster NB.

Außerhalb des RDLU-Nahbereichs werden die Endverzweiger EVZ üblicherweise an Access-Multiplexer (AMX) angeschlossen, die jeweils bis zu 60 Teilnehmer versorgen können.

Die Verbindung zwischen einem Access-Multiplexer AMX und Endverzweigern EVZ erfolgt beispielsweise über Kupferkabel, wobei die Entfernung (Trassenlänge) zwischen dem Access-Multiplexer AMX und dem jeweiligen Endverzweiger EVZ aus Dämpfungsgründen beispielsweise 400 m nicht überschreiten darf.

In dieser max. Kabeldistanz zwischen dem Access-Multiplexer AMX und dem jeweiligen Endverzweiger EVZ ist eine mögliche Restriktion zu sehen.

Eine weitere Restriktion ist beispielsweise darin zu sehen, daß jeder Access-Multiplexer AMX lediglich nur eine bestimmte Kapazität aufweist, beispielsweise daß nur 60 Teilnehmer mit jedem Access-Multiplexer AMX versorgt werden kann.

Somit ergibt sich für die zu bildenden Cluster C eine Restriktion von max. 60 Teilnehmern, die jeweils verglichen werden muß mit dem Clusterrestriktionsteilwerten, die sich beispielsweise ergeben aus der Summe der Teilnehmer, die jeweils an den Bedarfspunkten, den Knoten KN, die sich in dem Cluster C befinden, ergibt.

Wird das heuristische Verfahren in dieser Anwendung verwendet, so kann das Knapsack-Problem beispielsweise folgendermaßen gebildet werden:
- Die Objekte des Knapsacks sind die Endverzweiger EVZ, die mit dem jeweiligen Knoten KN, der aktuell bearbeitet wird, in einem Cluster C erscheinen können, ohne beispielsweise die Kapazitätsrestriktion von 60 Teilnehmern bei Anschluß an einen Access-Multiplexer AMX bzw. die Längenrestriktion von beispielsweise 400 m zu verletzen.
- Die Größe des Objekts ist beispielsweise eine Bedarfszahl D der dem Cluster C jeweils zugehörigen Endverzweiger EVZ, die sich ergibt aus der Summe der Restriktionsteilwerte der einzelnen Knoten KN, in diesem Fall der einzelnen Teilnehmer, die an dem jeweiligen Endverzweiger EVZ angeschlossen werden sollen.
- Als Länge einer Kante KA wird beispielsweise eine Länge der Leitung zur Kopplung der einzelnen Elemente des Kommunikationsnetzes bezeichnet. Der Gewinn eine Objekts ist beispielsweise in diesem Fall die Differenz aus dem Produkt einer vorgebbaren Zahl und der Bedarfszahl D und der je weiligen Länge l der Kanten KA.
- Die Kapazität des Knapsacks ist in diesem Fall jeweils die Kapazität eines Access-Multiplexers AMX, vermindert um die Bedarfszahl des jeweiligen Knotens KN. In jedem Cluster C ist jeweils ein Access-Multiplexer AMX enthalten. Somit wird durch das Clustering jeweils ein Cluster C gebildet, welches von einem Access-Multiplexer AMX vollständig versorgt werden kann.

Die Weiterbildung der Verfahren zur Bildung des Nahbereichs-clusters NB ist vorteilhaft, da dies in dieser Anwendung verwendet werden kann zur Kombination des RDLU-Nahbereichs mit den Clustern C.

Die bei diesem Verfahren in der Liste L gespeicherten Knoten KN entsprechen anschaulich den potentiellen Standorten für einen Access-Multiplexer AMX.

Beispielsweise die Kosten eines jeden Knotens KN ergeben sich beispielsweise aus der Summe der
- Kosten für den Access-Multiplexer AMX,
- Kosten für sämtliche in dem Cluster C enthaltenen Endverzweiger EVZ,
- Kabelkosten, die durch die Anbindung der Endverzweiger EVZ an den jeweiligen Access-Multiplexer AMX des Clusters C entstehen. Dabei sind die jeweils kostengünstigsten Kabelsorten in einer vorteilhaften Weiterbildung des Verfahrens zu wählen, die aufgrund ihrer Adrigkeit zulässig sind.

Auf diese Weise enthält jedes Cluster C einen eindeutigen Kostenwert, der als Clusterkosten CK bezeichnet wird.

Zur Bildung des Nahbereichsclusters NB wird in diesem Zusammenhang beispielsweise wiederum ein Knapsack-Problem gebildet, z. B. nach folgender Vorschrift:
- Die Objekte des Knapsack-Problems sind die Endverzweiger EVZ, die beispielsweise einer Abstandsrestriktion für den RDLU-Nahbereich genügen. Eine solche Abstandsrestriktion besteht beispielsweise darin, daß Endverzweiger EVZ mit insgesamt bis zu 960 Teilnehmern max. 500 m von dem Einspeisungspunkt, der RDLU, direkt über mehradrige Kupferkabel an die RDLU angeschlossen werden können.
- Die Größe eines Objekts ist gegeben durch die Bedarfszahl des jeweils zugehörigen Endverzweigers EVZ.
- Der Gewinn eines Objekts ist beispielsweise durch die Differenz von max. zulässigen zum tatsächlichen Abstand zur RDLU gegeben.
- Die Kapazität des Knapsacks ist in diesem Fall durch die Kapazität des RDLU-Nahbereichs bezüglich der Bedarfszahlen gegeben.

Das Knapsack-Problem wird beispielsweise mittels dynamischer Programmierung gelöst.

### Layout von elektrischen Schaltungen

Die oben beschriebenen Verfahren können vorteilhaft auch bei dem rechnergestützten Entwurf und somit dem rechnergestützten Layout von elektrischen Schaltungen eingesetzt werden, da auch bei elektrischen Schaltungen Restriktionen eingehalten werden müssen, die beispielsweise durch mindest einzuhaltenden Taktraten und somit Timingrestriktionen bzw. Laufzeitrestriktionen vorgegeben sind.

Den Knoten KN wird in diesem Fall jeweils mindestens ein Schaltungselement zugeordnet, die durch die Kanten KA miteinander gekoppelt sind, wobei die Kanten KA elektrischen Kopplungen zwischen den Schaltungselementen entsprechen.

In diesem Dokument wurden folgende Veröffentlichungen zitiert:
[1] G. Nemhauser und L. Wolsey, Integer and Combinatorial Optimation, Wiley Intescience Series in Discrete Mathmatics and Optimation, J. Wiley & Sons, S. 30-41, S. 393, 1988
[2] C. J. Alpart und A. B. Khang, Recent directions in netlist partitioning: A survey, INTEGRATION, the VLSI Journal, 19, S. 1- 81, 1995
[3] R. K. Ahuja, T. L. Magnanti, J. B. Orlin, Network Flows: Theory, Algorithms, and Apllications, Prentice Hall, New Jersey, S. 402 - 460, 1993

## Patentansprüche

1. Verfahren zur rechnergestützten Ermittlung einer Struktur eines technischen Systems,
- bei dem das technische System durch einen Graphen (G) beschrieben wird, welcher Graph (G) Knoten (KN) und Kanten (KA) aufweist, die in Cluster (C) aufgeteilt werden, dadurch gekennzeichnet, daß
- bei dem Knoten (KN) des Graphen (G) jeweils mindestens ein Restriktionsteilwert (RTW) zugeordnet wird,
- bei dem bei der Aufteilung der Knoten (KN) in Cluster (C) mindestens eine vorgebbare Restriktion (R) berücksichtigt wird, indem für die Cluster (C) überprüft wird, ob die Gruppierung der Knoten (KN) zu einem Cluster-Restriktionswert führt, mit dem die Restriktion verletzt wird,
- bei dem sich der Cluster-Restriktionswert aus den Restriktionsteilwerten (RTW) der Knoten (KN) der jeweiligen Cluster (C) ergibt, und
- bei dem sich eine bei dem Verfahren zu optimierende Zielfunktion auf die Cluster (C) bezieht.

2. Verfahren nach Anspruch 1,
bei dem eine Heuristik zur Aufteilung der Knoten (KN) eingesetzt wird.

3. Verfahren nach Anspruch 2,
bei dem die Heuristik folgende Verfahrensschritte umfaßt:
- es werden Knoten (KN) ermittelt, die mindestens über eine Kante (KN) mit einem weiteren Knoten (KN) gekoppelt sind, und in einer in einem Speicher (SP) eines Rechners (R) gespeicherten Liste (L) eingetragen (101),
- es werden iterativ folgende Schritte solange durchgeführt, bis kein Knoten mehr in der Liste (L) gespeichert ist (102):
-- es wird für mindestens einen Teil der Knoten in der Liste (L) ein Knapsack-Problem gebildet (103),
-- durch Lösen des Knapsack-Problems wird mindestens ein Cluster (C) gebildet (104), und
-- die Knoten (KN) des jeweiligen Clusters (C) werden aus der Liste (L) entfernt (105).

4. Verfahren nach Anspruch 3,
bei dem die Knoten (KN) in der Liste (L) bezüglich der Anzahl von mit dem jeweiligen Knoten (KN) gekopppelten Knoten (KN) monoton steigend eingetragen werden.

5. Verfahren nach Anspruch 4 oder 5,
bei dem das Knapsack-Problem nach folgender Vorschrift gebildet wird:
- Objekte des Knapsack-Problems sind für den jeweiligen Knoten (KN) weitere Knoten (KN), die mit dem jeweiligen Knoten (KN) gekoppelt sind,
- eine Größe des Objekts wird gebildet aus den Restriktionsteilwerten (RTW) der jeweiligen weiteren Knoten (KN),
- eine Kapazität eines Knapsacks ergibt sich aus der Differenz der Restriktion und des Restriktionsteilwerts (RTW) des jeweiligen Knotens (KN).

6. Verfahren nach einem der Ansprüche 1 bis 5,
bei dem das Knapsack-Problem mit einem Verfahren nach dem Prinzip der Dynamischen Programmierung gelöst wird.

7. Verfahren nach Anspruch 1,
- bei dem mindestens einem Teil der Knoten (KN) und/oder mindestens einem Teil der Kanten (KA) Kostenwerte zugeordnet werden,
- bei dem für die rechnergestützte Aufteilung der Knoten (KN) ein Set Partitioning Problem gebildet wird,
- bei dem durch Lösung des Set Partitioning Problems die Cluster (C) ermittelt werden.

8. Verfahren nach Anspruch 7,
- bei dem Zusammenhangskomponenten (ZK) des Graphen (G) ermittelt werden und in einer in einem Speicher (SP) eines Rechners (R) gespeicherten Liste (L) eingetragen werden, und
- bei dem iterativ folgende Schritte solange durchgeführt werden, bis keine Zusammenhangskomponente (ZK) mehr in der Liste (L) gespeichert ist:
-- es werden für mindestens eine Zusammenhangskomponente (ZK) Cluster (C) ermittelt, wobei ein Cluster-Restriktionsteilwert (CRTW) eines Clusters (C) maximal gleich groß ist wie die Restriktion (R),
-- der Cluster-Restriktionsteilwert (CRTW) ergibt sich aus den Restriktionsteilwerten (RTW) der in dem Cluster (C) enthaltenen Knoten (KN),
-- es werden Clusterkosten (CK) jeweils eines Clusters (C) bestimmt,
-- das Set Partitioning Problem für die jeweilige Zusammenhangskomponente (ZK) wird gelöst.

9. Verfahren nach Anspruch 8,
bei dem bei der Lösung des Set Partitioning Problems für die jeweilige Zusammenhangskomponente (ZK) alle Knoten (KN) der jeweiligen Zusammenhangskomponente (ZK) genau einem Cluster (C) zugeordnet werden.

10. Verfahren nach einem der Ansprüche 7 bis 9,
bei dem die Cluster (C) derart gebildet werden, daß mindestens ein Knoten (KN) in jedem Cluster (C) mit allen anderen Knoten (KN) des jeweiligen Clusters (C) gekoppelt ist.

11. Verfahren nach einem der Ansprüche 1 bis 10,
bei dem ein Nahbereichs-Cluster (NB) aus Knoten (KN) gebildet wird, die zusätzlich zu den Knoten (KN) des Graphen (G) weitere Knoten (KNN) enthalten, die nicht in dem Graphen (G) enthalten sind.

12. Verfahren nach Anspruch 11,
- bei dem das Nahbereichs-Cluster (NB) und die ermittelten Cluster (C) gemeinsam in weiteren Verfahrensschritten bearbeitet werden, und
- bei dem die Anzahl der ermittelten Cluster (C) unter Berücksichtigung des Nahbereichs-Clusters (NB) in weiteren Verfahrensschritten reduziert wird.

13. Verfahren nach Anspruch 12,
bei dem die Reduktion der Anzahl der ermittelten Cluster (C) derart erfolgt, daß
- für mindestens einen Teil der Cluster (C) mindestens ein Knoten (KN) des jeweiligen Clusters (C) in einem anderen Cluster (C) zugeordnet wird, wobei
- die neue Zuordnung nur dann erfolgt, wenn die Restriktion (R) durch die neu gebildeten Cluster-Restriktionsteilwerte (CRTW) nicht verletzt wird.

14. Verfahren nach Anspruch 13,
bei dem nur Cluster (C) berücksichtigt werden, die genau einen Knoten (KN) aufweisen.

15. Verfahren nach einem der Ansprüche 11 bis 14,
- bei dem mindestens einem Teil der Knoten (KN) und/oder mindestens einem Teil der Kanten (KA) Kostenwerte zugeordnet werden,
- bei dem eine Optimierung durch die ermittelten Cluster (C) entstandenen Gesamtkosten (GK) durchgeführt wird durch Lösen eines Linearen Zuordnungsproblems, wobei folgende Verfahrensschritte durchgeführt werden:
-- es wird eine obere Schranke (ub) und eine untere Schranke (1b) gewählt,
-- es wird ein Cluster-Menge (CM) gebildet, die alle Cluster (C) enthält, die mindestens zwei Knoten (KN) aufweisen,
-- es werden iterativ die folgenden Schritte durchgeführt, bis der Wert der oberen Schranke (ub) gleich ist dem Wert der unteren Schranke (1b):
--- aus jedem Cluster (C) der Cluster-Menge (CM) wird ein Knoten (KN) ausgewählt und in einer Cluster-Mengen-Liste (CML) gespeichert,
--- es wird mindestens eine optionale Zuordnung von Knoten (KN) der Cluster-Mengen-Liste (CML) zu Clustern (C) der Cluster-Menge (CM) gebildet, wobei durch die optionale Zuordnung die Restriktion nicht verletzt wird,
--- durch Lösen des Linearen Zuordnungsproblems wird eine Zuordnung der Knoten (KN) der Cluster-Mengen-Liste (CML) zu Clustern (C) der Cluster-Menge (CM) derart, gebildet, daß durch die neuen Cluster (C) eine Reduktion der Gesamtkosten (GK) erreicht wird.

16. Verfahren nach einem der Ansprüche 11 bis 14,
- bei dem mindestens einem Teil der Knoten (KN) und/oder mindestens einem Teil der Kanten (KA) Kostenwerte zugeordnet werden,
- bei dem eine Optimierung durch die ermittelten Cluster (C) entstandenen Gesamtkosten (GK) durch erneute Durchführung der Verfahrensschrite des Verfahrens nach einem der Ansprüche 7 bis 9 erfolgt.

17. Verwendung des Verfahrens nach einem der Ansprüche 1 bis 16 bei der Realisierung von Kommunikationsnetzen.

18. Verwendung des Verfahrens nach einem der Ansprüche 1 bis 16 zum Chip-Layout.

## Claims

1. Method for computer-aided determination of a structure of a technical system,
- in which the technical system is described by a graph (G), which graph (G) has nodes (KN) and edges (KA) which are partitioned into clusters (C), characterized in that
- nodes (KN) on the graph (G) are each assigned at least one restriction partial value (RTW),
- when the nodes (KN) are being partitioned into clusters (C), at least one restriction (R) which can be predetermined is taken into account in that a check is carried out for the clusters (C) to determine whether the grouping of the nodes (KN) leads to a cluster restriction value which contravenes the restriction,
- the cluster restriction value results from the restriction partial values (RTW) of the nodes (KN) of the respective clusters (C) and
- an objective function which is to be optimized for the method relates to the clusters (C).

2. Method according to Claim 1, in which a heuristic method is used to partition the nodes (KN).

3. Method according to Claim 2, in which the heuristic method comprises the following method steps:
- nodes (KN) are determined which are coupled at least via an edge (KA) to a further node (KN), and are entered (101) in a list (L) which is stored in a memory (SP) of a computer (R),
- the following steps are carried out iteratively, until no more nodes are stored (102) in the list (L):
-- a knapsack problem is formed (103) for at least some of the nodes in the list (L),
-- at least one cluster (C) is formed (104) by solving the knapsack problem, and
-- the nodes (KN) in the respective cluster (C) are removed (105) from the list (L).

4. Method according to Claim 3,
in which the nodes (KN) in the list (L) are entered rising monotonically with respect to the number of nodes (KN) coupled to the respective node (KN).

5. Method according to Claim 4 or 5,
in which the knapsack problem is formed in accordance with the following rule:
- objects in the knapsack problem are further nodes (KN) for the respective node (KN) which are coupled to said respective node (KN),
- a variable for the object is formed from the restriction partial values (RTW) of the respective further nodes (KN),
- the capacity of a knapsack is obtained from the difference between the restriction and the restriction partial value (RTW) of the respective node (KN).

6. Method according to one of Claims 1 to 5,
in which the knapsack problem is solved using a method based on the principle of dynamic programming.

7. Method according to Claim 1,
- in which at least some of the nodes (KN) and/or at least some of the edges (KA) are assigned cost values,
- in which a set partitioning problem is formed for the computer-aided partitioning of the nodes (KN),
- in which the clusters (C) are determined by solving the set partitioning problem.

8. Method according to Claim 7,
- in which relationship components (ZK) of the graph (G) are determined and are entered in a list (L) which is stored in a memory (SP) of a computer (R), and
- in which the following steps are carried out iteratively until no more relationship components (ZK) are stored in the list (L):
-- clusters (C) are determined for at least one relationship component (ZK), in which case a cluster restriction partial value (CRTW) of a cluster (C) is at most of the same magnitude as the restriction (R),
-- the cluster restriction partial value (CRTW) is obtained from the restriction partial values (RTW) of the nodes (KN) contained in the cluster (C),
-- cluster costs (CK) of in each case one cluster (C) are determined,
-- the set partitioning problem is solved for the respective relationship component (ZK).

9. Method according to Claim 8,
in which, when solving the set partitioning problem for the respective relationship component (ZK), all the nodes (KN) of the respective relationship component (ZK) are assigned to one, and only one, cluster (C).

10. Method according to one of Claims 7 to 9,
in which the clusters (C) are formed in such a manner that at least one node (KN) in each cluster (C) is coupled to all the other nodes (KN) in the respective cluster (C).

11. Method according to one of Claims 1 to 10,
in which a near-area cluster (NB) is formed from nodes (KN) which, in addition to the nodes (KN) on the graph (G), contain further nodes (KNN), which are not contained in the graph (G).

12. Method according to Claim 11,
- in which the near-area cluster (NB) and the determined clusters (C) are processed jointly in further method steps, and
- in which the number of determined clusters (C) is reduced in further method steps, taking account of the near-area cluster (NB).

13. Method according to Claim 12, in which the number of determined clusters (C) is reduced in such a manner that
- for at least some of the clusters (C), at least one node (KN) in the respective cluster (C) is assigned in another cluster (C) in which case
- the new assignment is made only when the restriction (R) is not contravened by the newly formed cluster restriction partial values (CRTW).

14. Method according to Claim 13,
in which the only clusters (C) considered are those which have one, and only one, node (KN).

15. Method according to one of Claims 11 to 14,
- in which at least some of the nodes (KN) and/or at least some of the edges (KA) are assigned cost values,
- in which the total costs (GK) incurred by the determined clusters (C) are optimized by solving a linear assignment problem, with the following method steps being carried out:
-- an upper limit (ub) and a lower limit (1b) are chosen,
-- a cluster set (CM) is formed which contains all clusters (C) which have at least two nodes (KN),
-- the following steps are carried out iteratively until the value of the upper limit (ub) is equal to the value of the lower limit (1b):
--- a node (KN) is chosen from each cluster (C) in the cluster set (CM), and is stored in a cluster set list (CML),
--- at least one optional assignment of nodes (KN) in the cluster set list (CML) to clusters (C) in the cluster set (CM) is formed, with the restriction not being contravened by the optional assignment,
--- an assignment of the nodes (KN) in the cluster set list (CML) to clusters (C) in the cluster set (CM) is formed by solving the linear assignment problem, in such a manner that the new clusters (C) result in a reduction in the total costs (GK).

16. Method according to one of Claims 11 to 14,
- in which at least some of the nodes (KN) and/or at least some of the edges (KA) are assigned cost values,
- in which the total costs (GK) incurred by the determined clusters (C) are optimized by once again carrying out the method steps of the method according to one of Claims 7 to 9.

17. Use of the method according to one of Claims 1 to 16 for the implementation of communications networks.

18. Use of the method according to one of Claims 1 to 16 for a chip layout.

## Revendications

1. Procédé de détermination assistée par ordinateur d'une structure d'un système technique, dans lequel le système technique est décrit par un graphe (G), lequel graphe (G) comporte des noeuds (KN) et des arêtes (KA) qui sont répartis en grappes C, caractérisé en ce que
- on attribue au noeud (KN) du graphe (G), à chaque fois, au moins une valeur partielle de restriction (RTW),
- lors de la répartition des noeuds (KN) en grappes (C), on prend en compte au moins une restriction (R) définissable d'avance, en vérifiant pour les grappes (C) si le groupement des noeuds (KN) conduit à une valeur de restriction de grappe qui viole la restriction,
- la valeur de restriction de grappe résulte des valeurs partielles de restriction (RTW) des noeuds (KN) des grappes (C) respectives, et
- une fonction de performance à optimiser dans le procédé se rapporte aux grappes (C).

2. Procédé selon la revendication 1, dans lequel on utilise une heuristique pour la répartition des noeuds (KN).

3. Procédé selon la revendication 2, dans lequel l'heuristique comprend les étapes suivantes :
- on détermine des noeuds (KN), qui sont couplés au moins par une arête (KA) à un autre noeud (KN), et on les inscrit dans une liste (L) stockée dans une mémoire (SP) d'un ordinateur (R) (101),
- on effectue par itération les étapes suivantes, jusqu'à ce que plus aucun noeud ne soit stocké dans la liste (L) (102) :
-- pour au moins une partie des noeuds dans la liste (L), on définit un problème de knapsack (103),
-- par résolution dudit problème de knapsack, on forme au moins une grappe (C) (104), et
-- on supprime les noeuds (KN) de la grappe (C) respective dans la liste (L) (105).

4. Procédé selon la revendication 3, dans lequel on inscrit les noeuds (KN) dans la liste (L) en ordre monotone croissant par rapport au nombre de noeuds (KN) couplés au noeud (KN) respectif.

5. Procédé selon la revendication 4 ou 5, dans lequel on définit le problème de knapsack selon la règle suivante :
- pour le noeud (KN) respectif, des objets du problème de knapsack sont d'autres noeuds (KN) qui sont couplés au noeud (KN) respectif,
- une grandeur de l'objet est formée à partir des valeurs partielles de restriction (RTW) des autres noeuds (KN) respectifs,
- une capacité d'un knapsack résulte de la différence entre la restriction et la valeur partielle de restriction (RTW) du noeud (KN) respectif.

6. Procédé selon l'une des revendications 1 à 5, dans lequel on résout le problème de knapsack au moyen d'un procédé selon le principe de la programmation dynamique.

7. Procédé selon la revendication 1,
- dans lequel on attribue des valeurs de coûts à au moins une partie des noeuds (KN) et/ou au moins une partie des arêtes (KA),
- dans lequel on définit un problème de set partitioning pour la répartition assistée par ordinateur des noeuds (KN),
- dans lequel on détermine les grappes (C) par résolution du problème de set partitioning.

8. Procédé selon la revendication 7,
- dans lequel on détermine des composantes connexes (ZK) du graphe (G) et on les inscrit dans une liste (L) stockée dans une mémoire (SP) d'un ordinateur (R), et
- dans lequel on effectue par itération les étapes suivantes, jusqu'à ce que plus aucune composante connexe (ZK) ne soit stockée dans la liste (L) :
-- on détermine des grappes (C) pour au moins une composante connexe (ZK), une valeur partielle de restriction de grappe (CRTW) d'une grappe (C) étant au maximum égale à la restriction (R),
-- la valeur partielle de restriction de grappe (CRTW) résulte des valeurs partielles de restriction (RTW) des noeuds (KN) contenus dans la grappe (C),
-- on détermine des coûts de grappe (CK) de respectivement une grappe (C),
-- on résout le problème de set partitioning pour la composante connexe (ZK) respective.

9. Procédé selon la revendication 8, dans lequel, lors de la résolution du problème de set partitioning pour la composante connexe (ZK) respective, on attribue tous les noeuds (KN) de la composante connexe (ZK) respective à précisément une grappe (C).

10. Procédé selon l'une des revendications 7 à 9, dans lequel on forme les grappes (C) de manière à ce qu'au moins un noeud (KN) dans chaque grappe (C) soit couplé à tous les autres noeuds (KN) de la grappe (C) respective.

11. Procédé selon l'une des revendications 1 à 10, dans lequel on forme une grappe de voisinage (NB) à partir de noeuds (KN), contenant, outre les noeuds (KN) du graphe (G), d'autres noeuds (KNN) qui ne sont pas contenus dans le graphe (G).

12. Procédé selon la revendication 11,
- dans lequel on traite ensemble, dans d'autres étapes du procédé, la grappe de voisinage (NB) et les grappes (C) déterminées, et
- dans lequel on réduit, dans d'autres étapes du procédé, le nombre de grappes (C) déterminées, en tenant compte de la grappe de voisinage (NB).

13. Procédé selon la revendication 12, dans lequel on réduit le nombre de grappes (C) déterminées, de manière à ce que
- pour au moins une partie des grappes (C), au moins un noeud (KN) de la grappe (C) respective soit attribué à une autre grappe (C),
- la nouvelle attribution n'ayant lieu que si la restriction (R) n'est pas violée par les valeurs partielles de restriction de grappe (CRTW) nouvellement formées.

14. Procédé selon la revendication 13, dans lequel on ne prend en compte que les grappes (C) qui comportent précisément un noeud (KN).

15. Procédé selon l'une des revendications 11 à 14,
- dans lequel on attribue des valeurs de coûts à au moins une partie des noeuds (KN) et/ou au moins une partie des arêtes (KA),
- dans lequel on procède à une optimisation des coûts globaux (GK) générés par les grappes (C) déterminées, par résolution d'un problème d'attribution linéaire, en effectuant les étapes suivantes :
-- on choisit une borne supérieure (ub) et une borne inférieure (Ib),
-- on forme un ensemble de grappes (CM), qui contient toutes les grappes (C) qui comportent au moins deux noeuds (KN),
-- on effectue par itération les étapes suivantes, jusqu'à ce que la valeur de la borne supérieure (ub) soit égale à la valeur de la borne inférieure (lb) :
--- parmi chaque grappe (C) de l'ensemble de grappes (CM), on choisit un noeud (KN) et on le stocke dans une liste d'ensembles de grappes (CML),
--- on définit au moins une attribution optionnelle de noeuds (KN) de la liste d'ensembles de grappes (CML) à des grappes (C) de l'ensemble de grappes (CM), la restriction n'étant pas violée par l'attribution optionnelle,
--- par résolution du problème d'attribution linéaire, on définit une attribution des noeuds (KN) de la liste d'ensembles de grappes (CML) à des grappes (C) de l'ensemble de grappes (CM), de manière à obtenir par les nouvelles grappes (C) une réduction des coûts globaux (GK).

16. Procédé selon l'une des revendications 11 à 14,
- dans lequel on attribue des valeurs de coûts à au moins une partie des noeuds (KN) et/ou une partie des arêtes (KA),
- dans lequel une optimisation des coûts globaux (GK) générés par les grappes (C) déterminées est obtenue en répétant les étapes du procédé selon l'une des revendications 7 à 9.

17. Utilisation du procédé selon l'une des revendications 1 à 16 dans la réalisation de réseaux de communication.

18. Utilisation du procédé selon l'une des revendications 1 à 16 pour la disposition de puces.
